# EUROPÄISCHE PATENTSCHRIFT

(11) **EP 2 954 246 B1**
(45) Veröffentlichungstag und Bekanntmachung des Hinweises auf die Patenterteilung: **21.11.2018**
(21) Anmeldenummer: 14702525.8
(22) Anmeldetag: 29.01.2014
(51) Int. Cl.: B21J 15/10, F16L 41/06, F16L 41/12, F16L 41/08, B21J 15/04

(54) **EINPRESSSTUTZEN FÜR ROHRVERBINDUNG UND WERKZEUG FÜR EINEN EINPRESSSTUTZEN**
INSERT CONNECTING PIECE FOR CONNECTING PIPES, AND TOOL FOR AN INSERT CONNECTING PIECE
EMBOUT EMMANCHABLE SERVANT À RACCORDER DES TUYAUX ET OUTIL DE FIXATION DUDIT EMBOUT

(30) Priorität: 05.02.2013 DE 102013101109
(43) Veröffentlichungstag der Anmeldung: 16.12.2015
(73) Patentinhaber: Viega Technology GmbH & Co. KG, 57439 Attendorn (DE)
(72) Erfinder: ROSENTHAL, Jörg, 51580 Reichshof (DE)
(74) Vertreter: Cohausz & Florack
(86) Internationale Anmeldenummer: PCT/EP2014/051673
(87) Internationale Veröffentlichungsnummer: WO 2014/122051

(56) Entgegenhaltungen:
- EP-A2- 0 339 156
- DE-A1- 10 257 818
- GB-A- 236 308
- GB-A- 378 617
- JP-A- S58 100 936
- US-A- 2 432 949
- US-A- 3 423 986
- US-A- 3 616 673
- US-A- 3 942 240
- US-A- 3 984 132
- US-A- 4 929 001
- US-A- 5 103 548
- US-A1- 2006 103 132

## Beschreibung

Die Erfindung betrifft einen Einpressstutzen zum Verbinden eines Abgangsrohrs an einem Rohr im Bereich einer Abgangsöffnung. Ebenso betrifft die Erfindung ein System aus einem Einpressstutzen und einem Werkzeug zum Befestigen eines Einpressstutzens.

Für die Hausinstallation werden bei der Verlegung von Wasserrohren für Heizungs- oder Trinkwasser oder bei der Verlegung von Gasrohren immer wieder Rohrabgänge benötigt, um beispielsweise einen Rohrverteiler zu realisieren.

Rohrabgänge der zuvor beschriebenen Art werden bisher mittels Stutzen, insbesondere Anschweißstutzen in dickwandige Rohre, insbesondere Stahlrohre eingebracht. Das manuelle Schweißen vor Ort ist jedoch zeitaufwendig, erfordert Fachpersonal, Gerätschaften und Sicherheitsvorkehrungen sowie Hitzeschutzmaßnahmen.

Ebenso ist es bekannt, Stutzen für Rohrabgänge mittels Schellen zu setzen. Hierbei ist jedoch wiederum der Materialeinsatz der Schelle relativ hoch, da das gesamte Rohr umgriffen werden muss und die Schelle durch ungünstige Hebelverhältnisse entsprechend biegesteif sein muss.

Im Fall einer Sprengschelle muss zusätzlich Raum für eine Treibladung samt Schneide und Schneidauslauf geschaffen werden, sowie die Sprengsicherheit sichergestellt werden, wodurch der Materialeinsatz zusätzlich ansteigt.

Die zuvor beschriebenen Stutzen werden nach der Herstellung einer seitlichen Abgangsöffnung im Rohr befestigt, wobei der Stutzen an der Rohroberfläche abdichtet. Die Anschweißstutzen sind mit einem Innengewinde oder einem Rohrende zum Anschweißen bzw. Anpressen ausgeführt. In der Regel sind die Schellen mit einem Innengewinde ausgeführt.

Die US 3,984,132 A offenbart einen Einpressstutzen zur Verbindung mit der Wand eines Behälters. Dabei wird ein Dorn mit einem Schaft und einem zylindrischen Abschnitt mit größerem Radius mittels eines Gewindestabes über eine Mutter durch den Einpressstutzen gezogen, um den Rohrstutzen zu verformen.

Die EP 0 339 156 A2 offenbart ein Fitting zum Einsetzen in ein Rohr, wobei das Fitting insbesondere an unter Gasdruck stehende Rohre verbaut werden kann. Das Fitting weist dabei eine Hülse mit einem konischen Ende und Vorsprüngen auf. Die Hülse wird durch eine Bohrung in der Rohrwand gesteckt und anschließend durch Eindrücken eines Dorns von innen geweitet.

Die US 3,942,240 A beschreibt eine Rohrverbindung an einen Speichertank, wobei ein Fitting mit einem Werkzeug an der Wand des Tanks befestigt wird. Das Werkzeug umfasst eine Kombination aus einer Spitze zum Durchbrechen der Wand und einem konischen Abschnitt, welcher zur Aufweitung des Fittings dient.

Aus der GB 236,308 A ist ein Fitting zur Verbindung eines Rohrabzweigs von einem dünnwandigen Hauptrohr bekannt. Das Fitting wird über ein Außengewinde zunächst mit dem Hauptrohr verschraubt. Ein Dorn bestehend aus einem Gewindestab und einem Kegelabschnitt wird durch das Fitting gezogen.

Die DE 102 57 818 A1 betrifft einen Stutzen für eine Behälterwand, welcher durch Aufbringung einer Zugkraft gestaucht werden kann, nachdem er durch eine Öffnung in einer Behälterwand geführt wurde. Dadurch soll eine axial spielfreie und dichte Verbindung entstehen.

Die US 4,929,001 A betrifft einen Schlauchverbinder, welcher über ein Innengewinde eines zylindrischen Endabschnitts mit einer Zugkraft beaufschlagt wird. Dabei wird ein Abschnitt nahe der Öffnung des zu verbindenden Rohrs verformt.

Der vorliegenden Erfindung liegt daher das technische Problem zugrunde, einen Einpressstutzen und ein System aus Einpressstutzen und einem Werkzeug zum Verbinden eines Abgangsrohres an einem Rohr anzugeben, die einen geringeren Installationsaufwand erfordern und dadurch kostengünstiger sind.

Das zuvor aufgezeigte technische Problem wird erfindungsgemäß zunächst durch einen Einpressstutzen zum Verbinden eines Abgangsrohrs an einem Rohr im Bereich einer Abgangsöffnung mit den Merkmalen des Anspruches 1 gelöst. Der erfindungsgemäße Einpressstutzen weist einen eine Innenöffnung aufweisenden Rohradapter und eine einen Rohrstutzen aufweisende Einpresstülle auf, wobei der Rohradapter eine Dichtfläche zur abdichtenden Anlage an der Außenwandung des Rohres aufweist und wobei der Rohrstutzen einen vom Rohradapter abgewandten sich verjüngenden Endabschnitt aufweist.

Der Einpressstutzen kann in eine vorangebrachte Abgangsöffnung im Rohr eingesetzt und - wie nachfolgend beschrieben wird - durch einen einfachen Bearbeitungsvorgang eingepresst werden. Der Rohrstutzen der Einpresstülle wird dabei vom Rohradapter von außen gehalten und ragt durch die Abgangsöffnung in das Innere des Rohres hinein. Durch den Bearbeitungsvorgang wird der innere endseitige Abschnitt des Rohrstutzens umgebördelt und aufgeweitet, so dass sich dieser Teil des Rohrstutzens von innen an die Rohrwandung anlegt und eine anpressende Kraft auf die Einpresstülle und somit auf den Rohradapter ausübt. Der Rohradapter dichtet dann gegebenenfalls mittels einer Dichtung oder durch geeignete Materialwahl mit der Rohrwandung von außen ab. Anschließend kann ein Rohr, ein Rohrverbinder oder eine Armatur in ein in der Einpresstülle ausgebildetes Innengewinde abdichtend eingebracht werden.

Das oben aufgezeigte technische Problem wird auch durch ein System zum Befestigen des Einpressstutzens an einem Rohr gelöst, wobei das Werkzeug einen Zugdorn aufweist, der einen Schaft und einen Umformabschnitt mit einem gegenüber dem Schaft vergrößerten Außendurchmesser aufweist. Dabei ist der Außendurchmesser des gesamten Schafts kleiner als der Innendurchmesser des Rohrstutzens der Einpresstülle.

Zusätzlich beschrieben wird auch ein Setzwerkzeug zum Befestigen eines zuvor erläuterten Einpressstutzens an einem Rohr mittels einer Pressmaschine, mit einem Zugdorn, der einen Schaft und einen Umformabschnitt mit einem gegenüber dem Schaft vergrößerten Außendurchmesser aufweist, mit einem Gehäuse und mit einem im Gehäuse beweglich angeordneten Zugschlitten, wobei das Gehäuse an zwei sich gegenüber liegenden Seitenflächen Langlöcher aufweist, wobei das Gehäuse eine erste Stirnseite zur Anlage an der Pressmaschine und eine zweite gegenüberliegende Stirnseite zur Anlage am Einpressstutzen aufweist, und wobei der Zugschlitten mit dem Zugdorn verbindbar ist und eine Queröffnung zur Aufnahme eines Sicherungsbolzens der Pressmaschine aufweist.

Somit kann eine herkömmliche, bei den Installationsarbeiten in der Regel vorhandene Pressmaschine für das Setzen des Einpressstutzens verwendet werden. Der hauptsächliche Einsatzzweck der Pressmaschine ist jedoch das Verpressen von Rohrverbindern und Fittings mittels Kaltumformung der zu verbindenden Teile. Lediglich das Setzwerkzeug, nicht jedoch eine spezielle Maschine muss zusätzlich für die Verwendung der Einpressstutzen vorhanden sein.

Im Folgenden wird die Erfindung weiter anhand bevorzugter Merkmale und damit verbundener Vorteile näher erläutert.

In bevorzugter Weise ist zwischen dem Schaft und dem Umformabschnitt ein Absatz zur Anlage am sich verjüngenden Endabschnitt der Einpresstülle angeordnet ist. Dieser Absatz verbessert die Wirkungsweise des Werkzeugs, indem der Absatz eine definierte Position des Schaftes relativ zur Einpresstülle gewährleistet.

Der Einpressstutzen kann mit diesem Werkzeug in einfacher Weise installiert werden, indem zunächst der Einpressstutzen zusammen mit dem Werkzeug durch eine vorangebrachte Abgangsöffnung bzw. durch ein Querloch in das Rohr eingebracht wird. Dabei ist der Rohradapter auf die jeweilige Rohrgröße bzw. Rohrkrümmung angepasst.

Das innen liegende Werkzeug wird dann durch eine Zugkraft nach außen gezogen, wobei die Zugkraft mittels einer manuellen oder motorisch angetrieben Zugmaschine durch ein Abstützen an der Außenfläche der Einpresstülle oder am mit der Einpresstülle einteilig ausgebildeten Rohradapter erzeugt wird. Durch die Zugkraft kommt der am Zugdorn ausgebildete Übergang zwischen Schaft und Umformabschnitt beziehungsweise der an dieser Stelle ausgebildete Absatz mit dem distalen Ende des Rohrstutzens der Einpresstülle in Anlage und belastet den Rohrstutzen aus dem Rohr hinaus radial nach außen. Der im Rohr befindliche Teil des Rohrstutzens wird dadurch umgebördelt und radial aufgeweitet.

Durch den Umbördelungsvorgang zieht sich die Einpresstülle samt Rohradapter gegen das Rohr und führt zur gewünschten Abdichtung, gegebenenfalls durch ein Zusammenpressen einer Dichtung zwischen Rohr und Rohradapter. Der radiale Aufweitvorgang vergrößert den Hinterschnitt der Einpresstülle im Rohr und erhöht somit deren Ausreißfestigkeit.

In bevorzugter Weise ist die Oberfläche des Umformabschnitts Oberflächen-gehärtet, mit einer Verschleiß reduzierenden Beschichtung und/oder mit reibungsverringernder Beschichtung versehen, um eine erhöhte Standzeit des Werkzeuges zu gewährleisten.

Durch den zuvor beschriebenen erfindungsgemäßen Einpressstutzen und durch das beschriebene erfindungsgemäße System mit Werkzeug ergeben sich zunächst ein gegenüber dem Schweißen geringerer Arbeitsaufwand zum Herstellen des seitlichen Abgangs und ein gegenüber der Schelle geringerer Materialeinsatz. Weiterhin erfolgt das Einpressverfahren ohne Hitzeeinwirkung, weshalb baustellenseitig keine Sicherheitsvorkehrungen getroffen werden müssen, wie diese beispielweise bei Schweißverfahren erforderlich sind. Zusätzlich sitzt der Einpressstutzen durch die geeignet gewählte Geometrie des Rohradapters orthogonal zur Rohrachse und bedarf keiner manuellen Ausrichtung und/oder Vermessung.

Wie schon erwähnt kann eine Dichtung zum Abdichten des Rohradapters gegenüber dem Rohr vorgesehen sein, vorzugsweise ein herkömmlicher O-Ring. Dagegen kann die Dichtfläche des Rohradapters auch durch eine geeignete Materialwahl direkt mit der Außenfläche des Rohres abdichten, ohne dass es einer separaten Dichtung bedarf.

Als Materialien für das Rohr, den Rohradapter und den Einpressstutzen kommen sowohl Metalle, Kunststoffe als auch Kombinationen in Frage, wobei die gewählten Materialien ausreichend formstabil sein müssen. Für die umzuformenden Abschnitte des Einpressstutzens wird zusätzlich gefordert, dass diese im Bereich des sich verjüngenden Endabschnittes dauerhaft plastisch verformbar sind, um die durch die Umformung erhaltene Form dauerhaft beizubehalten.

Der Rohradapter und die Einpresstülle können in bevorzugter Weise einstückig ausgebildet sein. Dadurch wird nur ein Bauteil mit einer eventuellen Dichtung benötigt, um einen Rohrabgang zu installieren.

Dagegen können bei dem beschriebenen Einpressstutzen der Rohradapter und die Einpresstülle zweistückig ausgebildet sein, wobei die Einpresstülle einen Flansch aufweist und wobei der Rohradapter eine an den Flansch der Einpresstülle angepasste und gegenüber der Dichtfläche angeordnete Anlagefläche aufweist. Die Einpresstülle wird dann abdichtend, erneut gegebenenfalls mit einer separaten Dichtung, mit dem Rohradapter verbunden, so dass im Verbund ein dichter Rohrabgang installiert wird. Diese Verbindung kann durch Schweißen, Kleben oder Löten oder in anderer Weise dauerhaft hergestellt werden.

Dabei weist in weiter bevorzugter Weise der Rohrstutzen der Einpresstülle einen an den Innendurchmesser des Rohradapters angepassten Außendurchmesser auf, so dass der Rohradapter gleichzeitig eine Führung, gegebenenfalls orthogonal zur Achse des Rohres ermöglicht.

Unabhängig davon, ob die Einsteckhülse und der Rohradapter einstückig oder zweistückig ausgebildet sind, weist der Verbund aus beiden Bauteilen eine Innenöffnung auf, an die das Abgangsrohr angeschlossen werden kann. Dazu kann an dem Verbund ein Rohrstück angeschweißt oder anderweitig stoffschlüssig verbunden sein, an das dann das Abgangsrohr insbesondere mittels einer Pressverbindung angeschlossen wird. Ebenso kann ein Innengewinde in der Innenöffnung vorgesehen sein, in das das Abgangsrohr oder ein Fitting zum Anschließen des Abgangsrohrs eingeschraubt werden kann.

Darüber hinaus kann der Rohrstutzen der Einpresstülle einen an den Innendurchmesser der Abgangsöffnung angepassten Außendurchmesser aufweisen, so dass ein exakter Sitz in der Abgangsöffnung gewährleistet ist und ein fester Sitz des Einpressstutzens nach dem Umbördeln und Aufweiten gewährleistet ist.

Der sich verjüngende Endabschnitt des Rohrstutzens ist zumindest teilweise konisch ausgebildet. Dadurch ist der untere Rand des Rohrstutzens nach innen und unten ausgerichtet, so dass dieser Rand in festem Eingriff mit dem am Zugdorn ausgebildeten Absatz bzw. am Übergang zwischen sich verjüngendem Abschnitt und dem Schaft in Eingriff gelangen kann. Zudem ergibt sich zwischen dem - in der Regel zylindrischen - Abschnitt des Rohrstutzens und dem konischen Endabschnitt eine nach innen abknickende umlaufende Linie, die bei Umbördeln während des Herausziehens des Werkzeugs eine vorgegebene Knickstelle bildet.

Der sich verjüngende Endabschnitt kann auch kugelig oder anderweitig bauchig ausgebildet sein, so dass das Umformen insbesondere zu Beginn erleichtert wird.

Das Umbördeln stark vereinfachend weist der Rohrstutzen im Bereich des Endabschnittes eine Mehrzahl von Öffnungen auf, die ein Ausdehnen in radialer Richtung nach außen erleichtern. Die Öffnungen erstrecken sich in Längsrichtung und sind im Bereich des zylindrischen Abschnitts des Rohrstutzens und im Bereich des Endabschnitts ausgebildet. Diese Ausgestaltung der Öffnungen erleichtert gerade das Aufweiten im Bereich der beschriebenen Knickstelle zwischen dem konisch ausgebildeten Endabschnitt und dem zylindrischen Abschnitt des Rohrstutzens.

Ein weiterer Vorteil der Öffnungen besteht darin, dass dann, wenn ein nach unten abgehende Abgangsrohr angeschlossen wird, und dann, wenn ein fluides Medium wie Wasser im Rohr transportiert wird, die Öffnung eine Entleerung des Rohres ermöglichen, bzw. nicht verhindern. Denn die Öffnungen verlaufen in bevorzugter Weise bis zur Rohrwandung hin und blockieren nicht das Entleeren des Rohrs.

Die Öffnungen können als durchgängige Schlitze oder als eine Mehrzahl von Löchern, insbesondere als Lochreihen im Endabschnitt und/oder im Endabschnitt der Einpresstülle ausgebildet sein.

Das oben beschriebene Werkzeug zum Befestigen eines Einpressstutzens kann in bevorzugter Weise dadurch ausgebildet sein, dass sich der Umformabschnitt des Zugdorns konisch oder kugelig erweitert. Wird dann eine sich gegen die Einpresstülle abstützenden Zugmaschine verwendet, die den Zugdorn nach außen zieht, so führt der konische oder kugelige Abschnitt ohne Weiteres dazu, dass der Endabschnitt der Einpresstülle umgebördelt und aufgeweitet wird. Ebenso ist ein manuelles Herausziehen ohne Zugmaschine, ggf. mit Hilfe von Gewinden, möglich.

Bei einer weiteren Ausführung des Werkzeugs weist der Umformabschnitt eine im Wesentlichen zylindrische Form aufweist, wobei der Umformabschnitt gegenüber dem Schaft einen größeren Durchmesser aufweist. Dadurch wird dann der Absatz gebildet, der während des Herausziehens des Zugdorns in Anlage mit dem Endabschnitt des Rohrabschnitts der Einpresstülle gelangt. Während des Herausziehens wird dann der Endabschnitt umgebördelt und zumindest teilweise aufgeweitet.

Das beschriebene Werkzeug kann in vorteilhafter Weise einen mit der Einpresstülle verbindbaren Führungsadapter mit einer inneren Führungsfläche zum Führen des Zugdorns aufweisen. Dadurch kann eine Führung des Zugdorns über eine längere Strecke erreicht werden, als es allein mit der Einpresstülle möglich ist. Dazu kann der Führungsadapter mit einem Außengewinde zum Einschrauben in das Innengewinde der Einpresstülle versehen sein.

Das Werkzeug wird in bevorzugter Weise weiterhin durch eine Spannhülse zum Aufschieben auf den Zugdorn und dadurch weitergebildet, dass der Zugdorn an dem dem Umformabschnitt abgewandten Ende ein Außengewinde zum Aufdrehen einer Gewindemutter aufweist. Die Spannhülse passt dabei in bevorzugter Weise in den zuvor beschriebenen optionalen Führungsadapter und wird durch diesen geführt. Durch ein Anziehen der Gewindemutter auf den Zugdorn wird die Spannhülse nach unten gegen den erweiterten Umformabschnitt des Zugdorns vorgespannt. Dadurch wird ein radial nach innen gerichteter Bund des verjüngten Endabschnitts der Einpresstülle eingespannt und festgehalten.

Darüber hinaus kann die Spannhülse ein Außengewinde zum Aufdrehen einer weiteren Gewindemutter aufweisen. Die Mutter zieht dann die Spannhülse und Zugdorn zusammen mit dem Endabschnitt der Einpresstülle aus dem Rohrabschnitt der Einpresstülle heraus, wodurch das Umbördeln und Aufweiten in der beschriebenen Weise durchgeführt wird.

Wird nun der Zugdorn zusammen mit der Spannhülse aus dem Rohr heraus gezogen, so wird der eingespannte Bund mit gezogen und der sich verjüngende Endabschnitt präzise umgebördelt und aufgeweitet. Bei fortschreitendem Herausziehen des Zugdorns wird schließlich der Bund von dem Endabschnitt der Einpresstülle durch Abscheren abgetrennt und mit nach außen heraustransportiert. Durch das Abtrennen wird in vorteilhafter Weise der Querschnitt der umgebördelten und aufgeweiteten Einpresstülle vergrößert. Zudem wird durch das Herausziehen des abgetrennten Bundes dem Installateur eine erfolgreiche Montage signalisiert.

Das oben bereits erwähnte Setzwerkzeug zum Befestigen eines Einpressstutzens an einem Rohr kann in bevorzugter Weise einen der bereits zuvor beschriebenen Zugdorne für das Setzen des Einpressstutzens verwenden. Die Pressmaschine, die an sich für das Verpressen von Fittings vorgesehen ist, schiebt bei deren Betätigen einen Kolben relativ zu Laschen vor, die mit der Pressmaschine verbunden sind und in Pressrichtung vorstehen. Mit den Laschen wiederum ist ein Sicherungsbolzen lösbar verbunden, der mit dem Zugschlitten in Eingriff steht, während der Zugschlitten mit dem Zugdorn verbunden, insbesondere verschraubt ist. Mit anderen Worten bilden die Pressmaschine mit den vorstehenden Laschen, der Sicherungsbolzen, der Zugschlitten und der Zugdorn eine erste Bewegungseinheit.

Des Weiteren liegt die erste Stirnseite des Gehäuses am Kolben oder an einer mit dem Kolben der Pressmaschine verbundenen Halterung an, während die zweite Stirnseite am Einpressstutzen anliegt. Somit bilden der bewegliche Kolben, das Gehäuse des Setzwerkzeugs und der Einpressstutzen eine zweite Bewegungseinheit.

Der Vorschub des Kolbens führt dann zu einer Relativbewegung zwischen den beiden Bewegungseinheiten und somit zu einem Herausziehen des Zugdorns aus dem Rohr, an dem der Einpressstutzen befestigt werden soll. Denn der Kolben drückt das Gehäuse und den Einpressstutzen relativ zum Zugdorn, Zugschlitten und Laschen der Pressmaschine weg. Da aber das Gehäuse ortsfest am Rohr anliegt, führt das bei einem Betätigen der Pressmaschine zu einer Relativbewegung der Pressmaschine weg vom Rohr. Dadurch wird der Zugdorn aus dem Rohr gezogen, was wiederum zu der oben beschriebenen Umbördelung und Aufweitung der Einpresstülle des Einpressstutzens führt.

In weiter bevorzugter Weise ist eine Druckfeder im Gehäuse des Setzwerkzeugs zur Vorspannung des Zugschlittens in Richtung der zweiten Stirnseite angeordnet. Dadurch wird im von der Pressmaschine unbelasteten Zustand der Zugdorn aus dem Gehäuse heraus gedrückt, wodurch die Installation des Einpressstutzens mit eingesetztem Zugdorn erleichtert wird.

Ebenfalls bevorzugt ist das Vorsehen einer Drehsicherung zwischen dem Zugschlitten und dem Gehäuse des Setzwerkzeugs, so dass beim Eindrehen des Zugdorns in den Zugschlitten ein Verdrehen des Zugschlittens innerhalb des Gehäuses auftritt. Wenn der Zugschlitten zylindrisch ausgebildet ist, dann kann zur Drehsicherung ein Stift vorgesehen sein, der mit dem Zugschlitten verbunden, insbesondere eingeschraubt ist und innerhalb eines Langloches im Gehäuse verläuft. Ist der Zugschlitten dagegen nicht rotationssymmetrisch, so kann die Drehsicherung allein durch die Außenform des Zugschlittens und die Innenform des Gehäuses realisiert sein.

Weitere Merkmale und Vorteile der vorliegenden Erfindung werden in der nachfolgenden Beschreibung von Ausführungsbeispielen erläutert, wozu auf die beigefügte Zeichnung verwiesen wird. In der Zeichnung zeigen
Fig. 1 im Querschnitt ein erstes Ausführungsbeispiel eines Einpressstutzens mit einteiliger Ausbildung von Rohradapter und Einpresstülle,
Fig. 2 im Querschnitt ein zweites Ausführungsbeispiel eines Einpressstutzens mit zweiteiliger Ausbildung von Rohradapter und Einpresstülle,
Fig. 3 eine dreidimensionale Explosionsdarstellung des zweiten Ausführungsbeispiels des Einpressstutzens,
Fig. 4a-d im Querschnitt das an einem Rohr installierte zweite Ausführungsbeispiel eines Einpressstutzens mit angesetztem Werkzeug gemäß einer ersten Ausführungsform mit einer Abfolge von einzelnen Stadien des Umbördelns und Aufweitens der Einpresstülle,
Fig. 5 ein drittes Ausführungsbeispiel eines Einpressstutzens und eines Werkzeugs zum Installieren des Einpressstutzens in einer dreidimensionalen Explosionsdarstellung,
Fig. 6 im Querschnitt das an einem Rohr installierte zweite Ausführungsbeispiel eines Einpressstutzens mit angesetztem Werkzeug gemäß einer zweiten Ausführungsform mit einer Abfolge von einzelnen Stadien des Umbördelns und Aufweitens der Einpresstülle,
Fig. 7a-c im Querschnitt das Ausführungsbeispiel nach Fig. 6 mit einer Abfolge von einzelnen Stadien des Umbördelns und Aufweitens der Einpresstülle,
Fig. 8 ein erfindungsgemäßes Setzwerkzeug mit angesetztem Zugdorn,
Fig. 9 eine dreidimensionale Explosionsdarstellung des Setzwerkzeugs nach Fig. 8,
Fig. 10 das Setzwerkzeug nach den Fig. 8 und 9 mit angesetztem Zugdorn und damit verbundenem Einpressstutzen,
Fig. 11 ein Presswerkzeug mit angeschlossenem Setzwerkzeug nach Fig. 10 und
Fig. 12 einen Ausschnitt aus der Fig. 11 im Querschnitt.

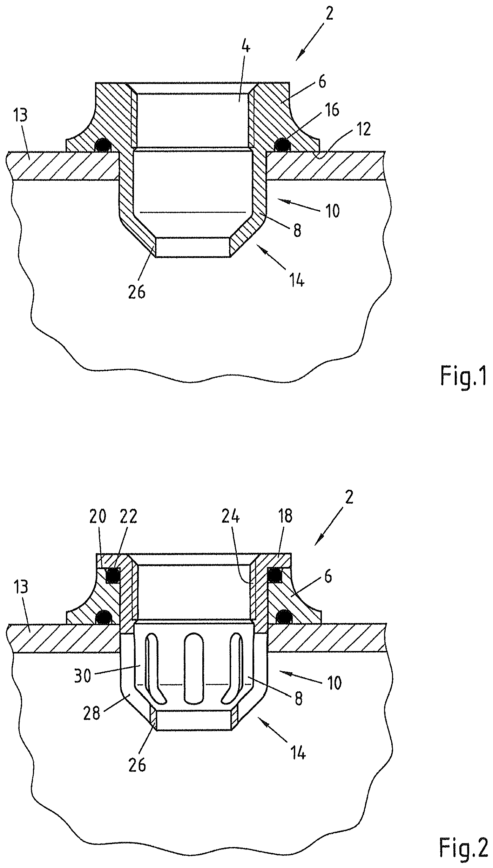

Fig. 1 zeigt ein erstes Ausführungsbeispiel eines erfindungsgemäßen Einpressstutzens 2 zum Verbinden eines Abgangsrohrs an einem Rohr im Bereich einer Abgangsöffnung. Der Einpressstutzen 2 weist einen eine Innenöffnung 4 aufweisenden Rohradapter 6 und eine einen Rohrstutzen 8 aufweisende Einpresstülle 10 auf. Der der Rohradapter 6 hat weiterhin eine Dichtfläche 12 zur abdichtenden Anlage an der Außenwandung eines Rohres 13. Darüber hinaus weist der Rohrstutzen 8 einen vom Rohradapter 6 abgewandten sich verjüngenden Endabschnitt 14 auf.

Die Dichtfläche 12 des Rohradapters 6 ist an einen bestimmten Rohrdurchmesser angepasst, so dass eine dichte Anlage an der Außenseite des Rohres 13 möglich ist. Dafür ist beispielsweise eine separate Dichtung 16 in Form eines O-Rings zum Abdichten des Rohradapters 6 gegenüber dem Rohr 13 vorgesehen. Anstelle einer separaten Dichtung 12 kann auch durch eine geeignete Materialwahl eine direkte dichtungslose Abdichtung mit der Außenseite des Rohres 13 möglich.

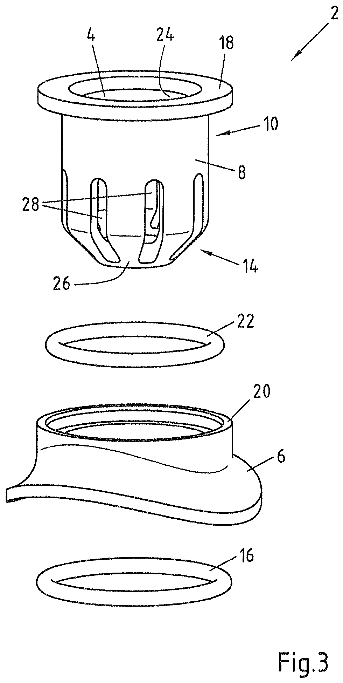

Wie in Fig. 1 dargestellt ist, sind der Rohradapter 6 und die Einpresstülle 10 einstückig ausgebildet. Fig. 2 und 3 zeigen dagegen ein zweites Ausführungsbeispiel eines Einpressstutzens 2, bei dem der Rohradapter 6 und die Einpresstülle 10 zweistückig ausgebildet sind. In diesem Fall weist die Einpresstülle 10 einen Flansch 18 auf und der Rohradapter 6 eine an den Flansch 18 der Einpresstülle 10 angepasste und gegenüber der Dichtfläche 12 angeordnete Anlagefläche 20 auf. Zwischen dem Flansch 18 und dem Rohradapter 6 ist eine weitere Dichtung 22 vorgesehen. Auch hier kann durch eine geeignete Materialwahl eine separate Dichtung vermieden werden.

Wie weiterhin der Fig. 2 zu entnehmen ist, weist der Rohrstutzen 8 einen an den Innendurchmesser des Rohradapters 6 angepassten Außendurchmesser auf, so dass es zur Anlage des Rohrstutzens 8 an der Innenseite des Rohradapters 6 kommt. Dadurch wird eine Führung der Einpresstülle 10 gegenüber dem Rohradapter 6 realisiert, wodurch eine orthogonale Ausrichtung der Einpresstülle gegenüber der Rohrachse erreicht und sichergestellt wird.

Darüber hinaus weist der Rohrstutzen 8 einen an den Innendurchmesser der Abgangsöffnung des Rohres 13 angepassten Außendurchmesser auf, so dass auch hier ein guter Sitz erreicht wird. Dazu wird vor der Installation des Einpressstutzens 2 eine entsprechende Bohrung in der Rohrwandung eingebracht.

Schließlich ist in der Einpresstülle 10 ein Innengewinde 24 eingearbeitet, so dass in geeigneter Weise eine Rohranschluss oder eine Armatur mit dem Einpressstutzen 2 verbunden werden kann.

Wie in den Fig. 1 bis 3 zu erkennen ist, ist der sich verjüngende Endabschnitt 14 des Rohrstutzens 8 zumindest teilweise konisch ausgebildet ist. Dadurch ergibt sich eine Querschnittsverengung und eine nach innen gerichteten unteren Rand bzw. Bund 26, der während der nachfolgend beschriebenen Installation durch das Werkzeug gegriffen und umgebördelt und aufgeweitet wird.

Wie Fig. 2 und 3 zeigen, sind für eine leichtere Verformbarkeit im Bereich des Endabschnittes 14 eine Mehrzahl von Öffnungen 28 vorgesehen, die sich in Längsrichtung erstrecken und durchgängig sowohl im Bereich des zylindrischen Abschnitts 30 des Rohrstutzens 8 als auch im Bereich des Endabschnitts 14 ausgebildet sind. Somit kann das Material des Rohrstutzens 8 während des Umbördelns und Aufweiten gezielt sternförmig radial nach außen ausweichen.

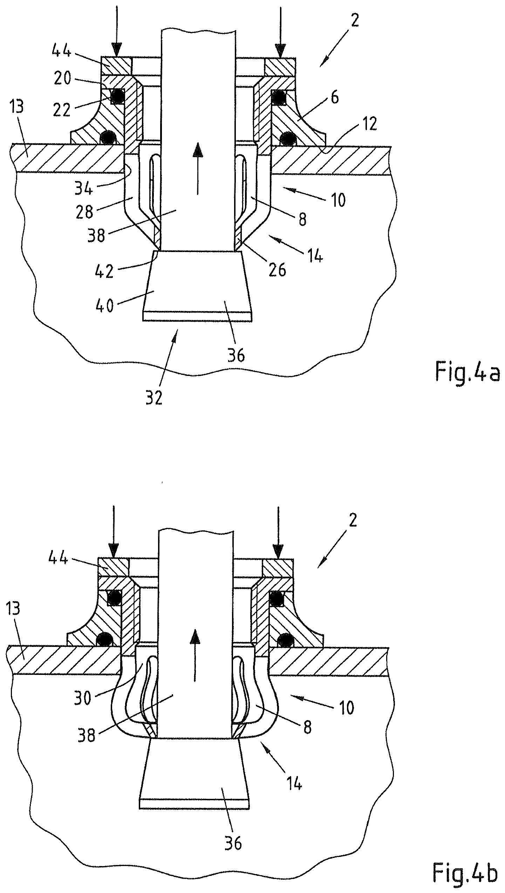

Fig. 4a zeigt nun ein erstes Ausführungsbeispiel eines erfindungsgemäßen Systems mit einem Einpressstutzen gemäß den Fig. 2 und 3 und mit einem Werkzeug 32 zum Befestigen eines Einpressstutzens 2 gemäß Fig. 2 und 3 an einem Rohr 13 im Bereich einer Abgangsöffnung 34. Das Werkzeug 32 weist einen Zugdorn 36 auf, der einen Schaft 38 und einen Umformabschnitt 40 mit einem gegenüber dem Schaft 38 vergrößerten Außendurchmesser aufweist. Dabei ist der größte Außendurchmesser des Umformabschnitts 40 kleiner als der Innendurchmesser des Rohrstutzens 8 der Einpresstülle 10.

Des Weiteren ist zwischen dem Schaft 38 und dem Umformabschnitt 40 ein Absatz 42 angeordnet, der während der Installation des Einpressstutzens am sich verjüngenden Endabschnitt 14 der Einpresstülle 10 bzw. am Bund 26 anliegt. Dadurch kann während des Herausziehens des Zugdorns 36 die umformende Kraft auf den Endabschnitt 14 ausgeübt werden. Ist der Absatz 42 nicht vorgesehen, so wird der sich verjüngende Endabschnitt 14 allein durch die Querschnittserweiterung des Schaftes umgebördelt.

Wie Fig. 4a weiterhin zeigt, erweitert sich der Umformabschnitt 40 konisch nach außen. Über ein Widerlager 44 (dargestellt mit nach unten gerichteten Pfeilen) kann durch eine sich gegen die Einpresstülle 10 abstützenden Zugmaschine oder manuell eine nach oben gerichtete Zugkraft (dargestellt mit einem Pfeil nach oben) auf den Zugdorn 32 ausgeübt werden. Dadurch kommt es durch die Anlage des Absatzes 24 am unteren Ende des Endabschnitts 14 der Einpresstülle 10 zu einer in zwei Schritten erfolgenden Umformung des Rohrabschnitts 8. Dieser Vorgang wird in den Fig. 4a bis 4d schrittweise dargestellt.

Fig. 4a zeigt die Ausgangsstellung. Fig. 4b zeigt den ersten Schritt der Umformung, bei der das untere Ende des Endabschnitts 14 nach oben gezogen wird. Dadurch wird das Material des Endabschnitts 14 gleichzeitig nach außen verdrängt, so dass der Endabschnitt 14 zunehmend umgebördelt wird. Dabei knickt der Endabschnitt 14 im Bereich zwischen dem konisch ausgebildeten Endabschnitt 14 und dem zylindrischen Abschnitt 30 des Rohrstutzens 8 um. Nach einem vorgegebenen Verstellweg des Schaftes 38 rutscht der Rand des Endabschnitts 14 von dem Absatz 42 ab, so dass das Umbördeln des Endabschnitts 14 abgeschlossen ist.

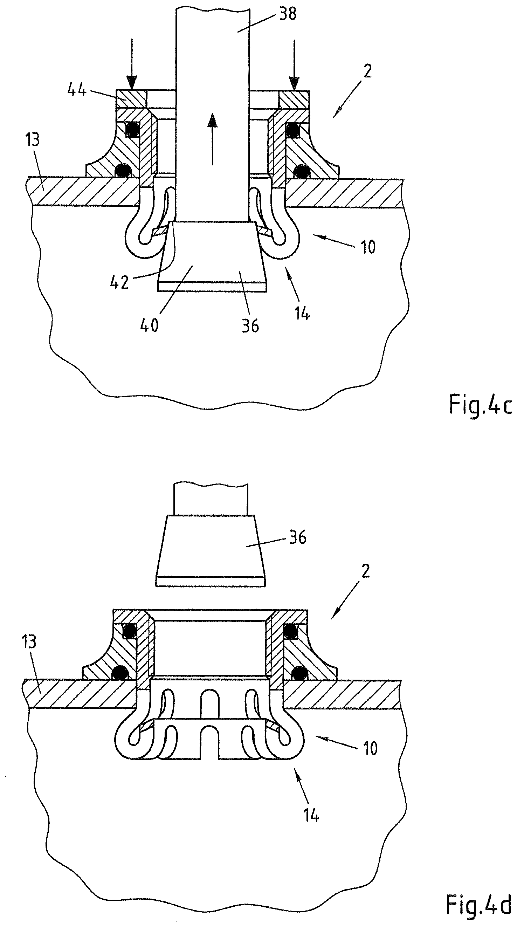

In Fig. 4c kommt dann zunehmend der konisch nach außen vorstehende Umformabschnitt 40 des Zugdorns 36 mit dem Endabschnitt 14 der Einpresstülle 10 in Berührung und weitet in einem zweiten Umformungsschritt mit fortschreitender Bewegung den umgebördelten Teil des Endabschnitts 14 nach außen auf, wie in Fig. 4d mit herausgezogenem Schaft 38 gezeigt ist.

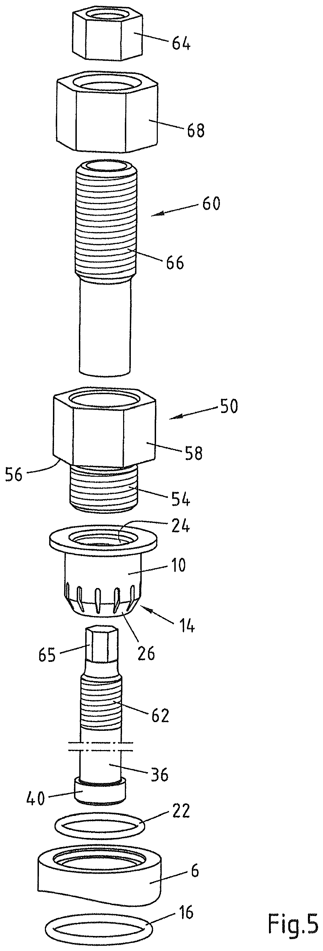

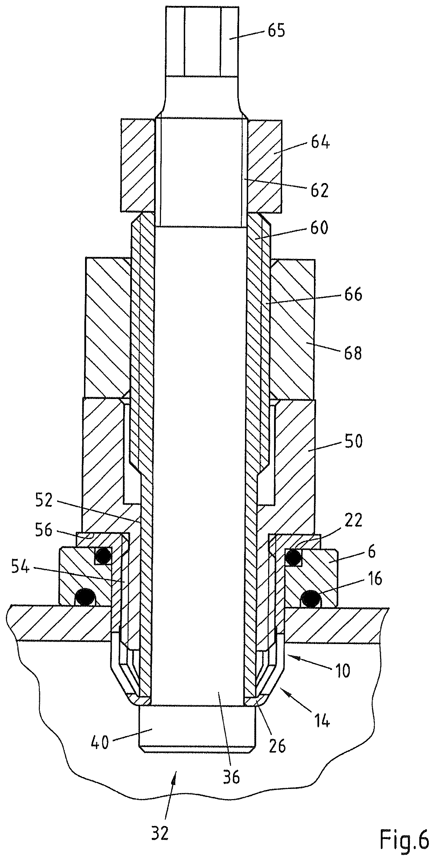

Die Fig. 5 und 6 zeigen ein zweites Ausführungsbeispiel eines Werkzeugs 32 für das Installieren eines Einpressstutzens 2 nach dem zweiten Ausführungsbeispiel gemäß Fig. 2 und 3.

Im Unterschied zum ersten Ausführungsbeispiel weist der Zugdorn 36 einen Umformabschnitt 40 mit einer im Wesentlichen zylindrischen Form auf.

Des Weiteren ist ein mit der Einpresstülle 10 verbindbarer Führungsadapter 50 mit einer inneren Führungsfläche 52 zum Führen des Zugdorns 36 vorgesehen. Dazu ist ein Außengewinde 54 zum Einschrauben in das Innengewinde 24 der Einpresstülle 10 vorgesehen. Weiterhin ist eine Anschlagfläche 56 für einen Anliegen an der Einpresstülle 10 vorgesehen. Mit einem Außensechskant 58 kann der Führungsadapter 50 in der Innengewinde 24 eingeschraubt werden.

Weiterhin ist eine Spannhülse 60 zum Aufschieben auf den Zugdorn 36 vorgesehen, die bevorzugt an der inneren Führungsfläche 52 des Führungsadapters 50 anliegt. Am Zugdorn 36 ist oberhalb der aufgeschobenen Spannhülse 60, also an dem dem Umformabschnitt 40 abgewandten Ende, ein Außengewinde 62 ausgebildet, auf das eine Gewindemutter 64 aufgeschraubt werden kann. Durch das Aufschrauben der Gewindemutter 64 bei gleichzeitigem Kontern der Drehbewegung mittels eines am oberen Ende des Schafts 36 ausgebildeten Sechskantes 65 wird die Spannhülse nach unten in Richtung des Umformabschnitts 40 geschoben, so dass der nach innen gerichtete untere Rand bzw. Bund 26 des verjüngten Endabschnitts 14 der Einpresstülle 10 eingespannt und somit relativ zum Zugdorn 36 fixiert wird. Der Zugdorn 36 kann somit auch als Einspanndorn bezeichnet werden.

Weiterhin ist an der Spannhülse 60 ein Außengewinde 66 zum Aufdrehen einer weiteren Gewindemutter 68 vorgesehen. Durch ein Anziehen der Gewindemutter 68, erneut bei gleichzeitigem Kontern mittels des Sechskants 65 wird die Spannhülse 60 gemeinsam mit dem Zugdorn 36 und zusammen mit dem eingespannten Bund 26 des Endabschnitts 14 der Einpresstülle 10 aus dem Rohr 13 herausgezogen.

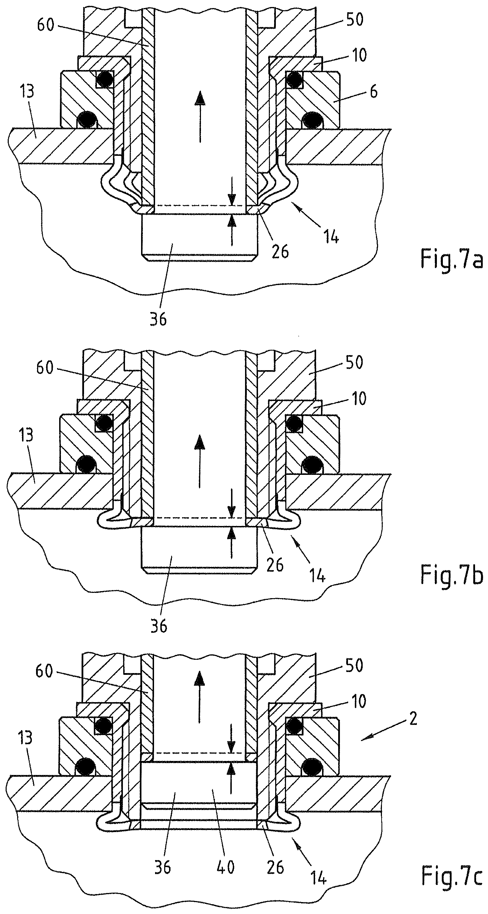

Während der Bewegung des Zugdorns 36 aus dem Rohr 13 hinaus, die in den Fig. 7a-c gezeigt ist, kommt es somit zu dem oben beschriebenen Umbördeln und Aufweiten des Endabschnittes 14 der Einpresstülle 10. Am Ende der Umformung (Fig. 7b) wird weiterhin eine Zugkraft auf den eingespannten Bund 26 ausgeübt, so dass der Bund 26 an dem unteren Rand des Führungsadapters 50 abgeschert, vom Endabschnitt 14 abgetrennt und aus der Einpresstülle 10 und somit aus dem Einpressstutzen 2 herausgezogen wird (Fig. 7c).

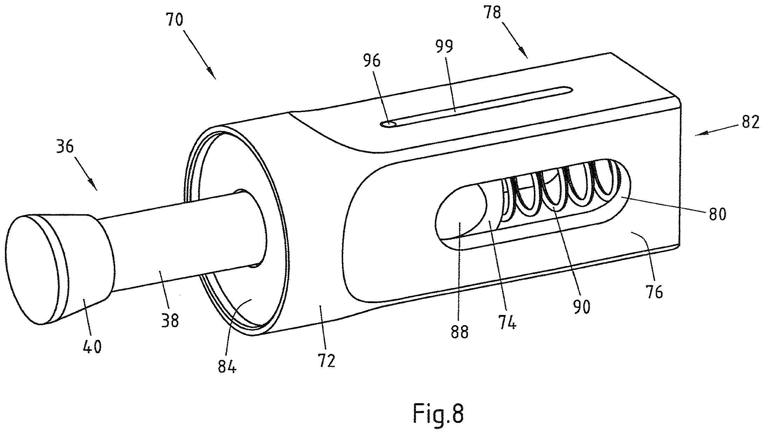

In den Fig. 8 bis 12 wird ein Ausführungsbeispiel eines erfindungsgemäßen Setzwerkzeugs allein und im Zusammenspiel mit einem Zugdorn, einem Einpressstutzen und einer Pressmaschine dargestellt. Dabei werden im Folgenden gleiche Bezugszeichen wie zuvor bei der Erläuterung der bisherigen Ausführungsbeispiele verwendet.

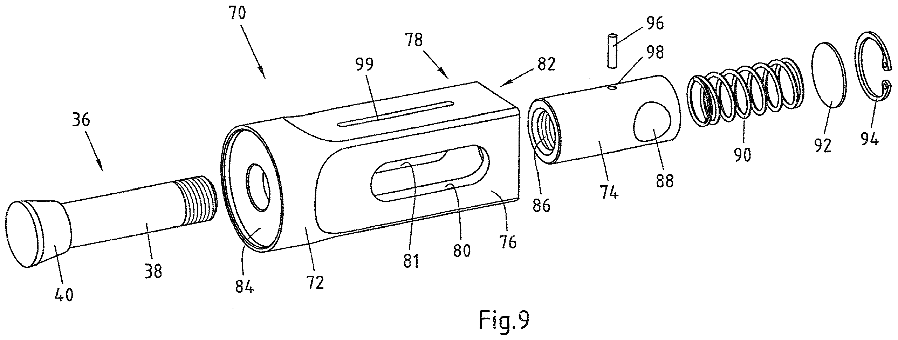

Die Fig. 8 und 9 zeigen ein Setzwerkzeug 70 zum Befestigen eines Einpressstutzens an einem Rohr, wie im Zusammenhang mit den Fig. 1 bis 4 zuvor erläutert worden ist. Wie schon in Fig. 4a bis 4d dargestellt ist ein Zugdorn 36 vorgesehen, der einen Schaft 38 und einen Umformabschnitt 40 mit einem gegenüber dem Schaft 38 vergrößerten Außendurchmesser aufweist.

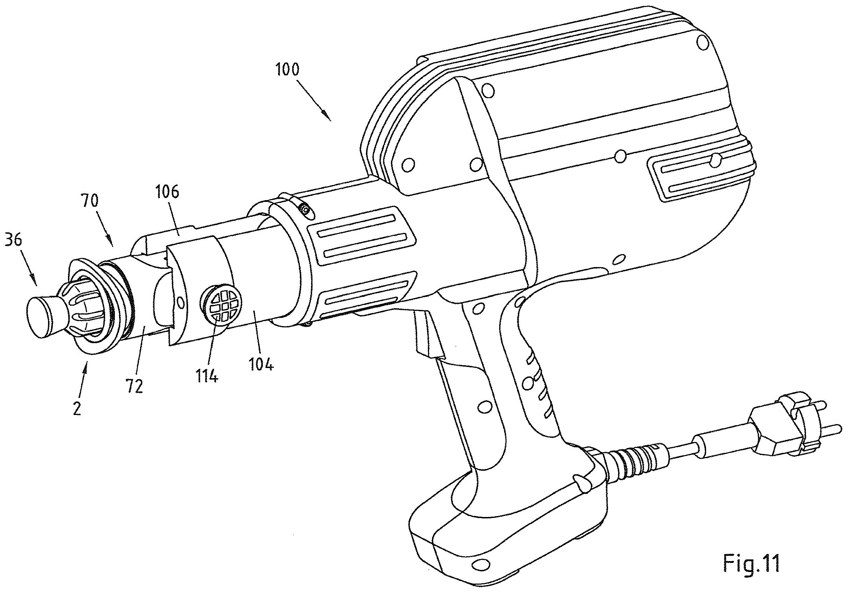

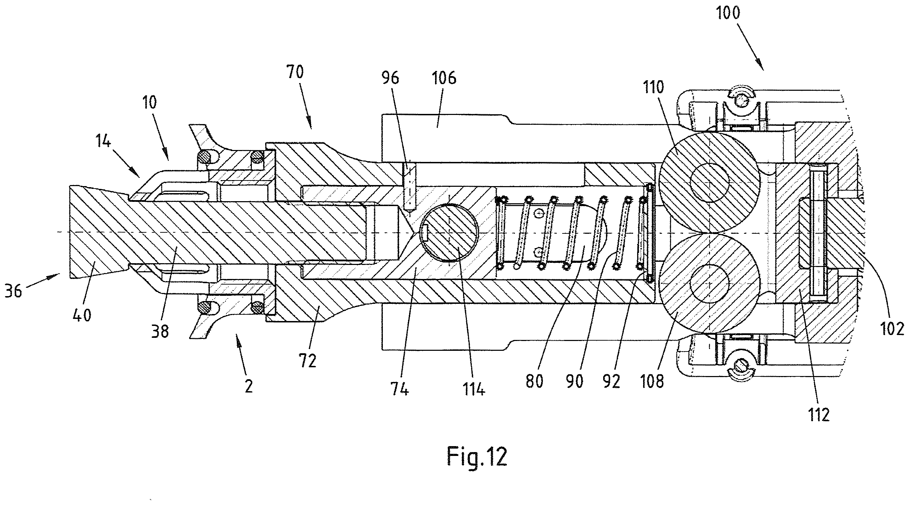

Das Setzwerkzeug 70 weist weiterhin ein Gehäuse 72 und einen im Gehäuse 72 beweglich angeordneten Zugschlitten 74 auf. Das Gehäuse 72 weist an zwei sich gegenüber liegenden Seitenflächen 76 und 78 Langlöcher 80 und 81 auf, wobei das Gehäuse 72 eine erste Stirnseite 82 zur Anlage an der Pressmaschine und eine zweite gegenüberliegende Stirnseite 84 zur Anlage am Einpressstutzen aufweist. Des Weiteren ist der Zugschlitten 74 mit dem Zugdorn 36 mittels eines Gewindes 86 verbindbar und weist eine Queröffnung 88 zur Aufnahme eines Sicherungsbolzens der Pressmaschine auf, wie weiter unten anhand der Fig. 11 und 12 beschrieben wird.

Wie die Fig. 8 und 9 weiter zeigen, ist eine Druckfeder 90 im Gehäuse 72 zur Vorspannung des Zugschlittens 74 in Richtung der zweiten Stirnseite 84 angeordnet. Zur Positionierung der Druckfeder 90 sind weiterhin eine Scheibe 92 und ein Sicherungsring 94 als Widerlager vorgesehen.

Des Weiteren weist das Setzwerkzeug eine Drehsicherung in Form eines Stifts 96 auf, der in einem Gewindeloch 98 eingeschraubt ist und in einem Längsloch 99 im Gehäuse 72 geführt wird. Diese Drehsicherung dient dazu, während des Einschraubens des Zugdorns 36 in das Gewinde 88 den Zugschlitten 74 vor einem Verdrehen zu sichern.

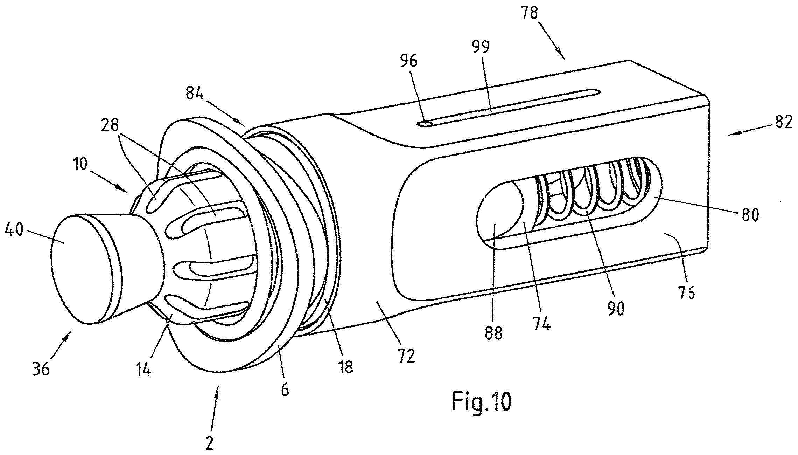

Fig. 10 zeigt das zuvor beschriebene Setzwerkzeug mit aufgesetztem Einpressstutzen 2, der durch den Zugdorn 36 an die Seitenfläche 84 angedrückt und somit in Position gehalten wird. Dazu ist der Zugdorn 36 mit dem Zugschlitten 74 verbunden.

In den Fig. 11 und 12 wird das Setzwerkzeug 70 im Zusammenwirken mit einer herkömmlichen Pressmaschine 100 beschrieben, die an sich für das Verpressen von Fittings und Rohrverbindern geeignet ist. Die Pressmaschine 100 ist dazu vorgesehen, einen Kolben 102 relativ zu Laschen 104 und 106, die mit der Pressmaschine 100 verbunden sind, vorzuschieben und damit ein Rollenpaar 108 und 110 über eine Halterung 112 zu verstellen. Die Ausbildung des Rollenpaars ist hier nicht von Bedeutung, deren Funktion wird nur bei dem Verpressen von Fittings benötigt und soll hier nicht weiter erläutert werden. Jedenfalls übertragen die Rollen 108 und 110 linear die vom Kolben 102 erzeugte Kraft auf das Gehäuse 72.

Weiterhin ist ein Sicherungsbolzen 114 vorgesehen, der mit den Laschen 104 und 106 lösbar verbunden ist. Durch den Sicherungsbolzen 108 wird der Zugschlitten 74, der innerhalb des Gehäuses 70 angeordnet ist, mit der Pressmaschine 100 verbunden. Wird nun die Pressmaschine 100 betätigt und der Kolben 102 relativ zur Pressmaschine 100 und somit auch relativ zu den Laschen 104 und 106 verstellt, dann kommt es zu einer entsprechenden Relativbewegung zwischen dem Gehäuse 72 und dem Zugschlitten 74. Diese Relativbewegung bewirkt dann eine Bewegung des am Gehäuse 72 anliegenden Einpressstutzens 2 relativ zum mit dem Zugschlitten 74 verbundenen Zugbolzen 36.

Somit wird durch Betätigen der Pressmaschine 100 der Zugbolzen 36 durch den Einpressstutzen 2 heraus gezogen, so dass der sich verjüngende Endabschnitt 14 der Einpresstülle 10 umgebördelt und aufgeweitet wird. Nach Abschluss des Bewegungshubs des Kolbens 102 ist das Aufweiten abgeschlossen und der Einpressstutzen 2 auf dem Rohr 13 (siehe Fig. 4) befestigt.

## Patentansprüche

1. Einpressstutzen zum Verbinden eines Abgangsrohrs an einem Rohr im Bereich einer Abgangsöffnung,
- mit einem eine Innenöffnung (4) aufweisenden Rohradapter (6) und
- mit einer einen Rohrstutzen (8) aufweisenden Einpresstülle (10),
- wobei der Rohradapter (6) eine Dichtfläche (12) zur abdichtenden Anlage an der Außenwandung des Rohres aufweist,
- wobei der Rohrstutzen (8) einen vom Rohradapter (6) abgewandten sich verjüngenden Endabschnitt (14) aufweist,
- wobei der sich verjüngende Endabschnitt (14) des Rohrstutzens (8) zumindest teilweise konisch ausgebildet ist, so dass sich eine Querschnittsverengung und ein nach innen gerichteter Bund (26) ergibt, **dadurch gekennzeichnet**
- **dass** der Rohrstutzen (8) im Bereich des Endabschnittes (14) eine Mehrzahl von Öffnungen (28) aufweist, wobei die Öffnungen (28) sich in Längsrichtung erstrecken und sowohl im Bereich des zylindrischen Abschnitts (30) des Rohrstutzens (8) als auch im Bereich des Endabschnitts (14) ausgebildet sind.

2. Einpressstutzen nach Anspruch 1,
**dadurch gekennzeichnet,**
**dass** der Rohradapter (6) und die Einpresstülle (10) einstückig ausgebildet sind.

3. Einpressstutzen nach Anspruch 1,
**dadurch gekennzeichnet,**
- **dass** der Rohradapter (6) und die Einpresstülle (10) zweistückig ausgebildet sind,
- **dass** die Einpresstülle (10) einen Flansch (18) aufweist und
- **dass** der Rohradapter (6) eine an den Flansch (18) der Einpresstülle (10) angepasste und gegenüber der Dichtfläche (12) angeordnete Anlagefläche (20) aufweist.

4. System aus einem Einpressstutzen nach einem der Ansprüche 1 bis 3 und aus einem Werkzeug zum Befestigen eines Einpressstutzens an einem Rohr,
- wobei das Werkzeug (32) einen Zugdorn (36) aufweist, der einen Schaft (38) und einen Umformabschnitt (40) mit einem gegenüber dem Schaft (38) vergrößerten Außendurchmesser aufweist, und
- wobei der Außendurchmesser kleiner als der Innendurchmesser des Rohrstutzens (8) der Einpresstülle (10) ist.

5. System nach Anspruch 4,
**dadurch gekennzeichnet**,
wobei zwischen dem Schaft (38) und dem Umformabschnitt (40) ein Absatz (42) zur Anlage am sich verjüngenden Endabschnitt (14) der Einpresstülle (10) angeordnet ist.

6. System nach Anspruch 4 oder 5,
**dadurch gekennzeichnet,**
**dass** ein mit der Einpresstülle (10) verbindbarer Führungsadapter (50) mit einer inneren Führungsfläche (52) zum Führen des Zugdorns (36) vorgesehen ist.

7. System nach einem der Ansprüche 4 bis 6,
**dadurch gekennzeichnet,**
- **dass** eine Spannhülse (60) zum Aufschieben auf den Zugdorn (36) vorgesehen ist, und
- **dass** der Zugdorn (36) an dem dem Umformabschnitt (40) abgewandten Ende ein Außengewinde (62) zum Aufdrehen einer Gewindemutter (64) aufweist.

8. System nach Anspruch 7,
**dadurch gekennzeichnet,**
**dass** die Spannhülse (60) ein Außengewinde (66) zum Aufdrehen einer Gewindemutter (68) aufweist.

9. System nach Anspruch 4,
**dadurch gekennzeichnet,**
- **dass** das Werkzeug (32) zum Befestigen des Einpressstutzens mittels einer Pressmaschine geeignet ist und
- **dass** das Werkzeug ein Gehäuse (72) und einen im Gehäuse (72) beweglich angeordneten Zugschlitten (74) aufweist,
- wobei das Gehäuse (72) an zwei sich gegenüber liegenden Seitenflächen (76, 78) Langlöcher (80,81) aufweist,
- wobei das Gehäuse (72) eine erste Stirnseite (82) zur Anlage an der Pressmaschine und eine zweite gegenüberliegende Stirnseite (84) zur Anlage am Einpressstutzen aufweist, und
- wobei der Zugschlitten (74) mit dem Zugdorn (36) verbindbar ist und eine Queröffnung (88) zur Aufnahme eines Sicherungsbolzens der Pressmaschine aufweist.

10. System nach Anspruch 9,
**dadurch gekennzeichnet,**
**dass** eine Druckfeder (90) im Gehäuse (72) zur Vorspannung des Zugschlittens (74) in Richtung der zweiten Stirnseite (84) angeordnet ist.

## Claims

1. Press-in connecting piece for connecting a branch pipe to a pipe in the region of a branch opening,
- comprising a pipe adapter (6) having an inner opening (4), and
- a press-in nozzle (10) having a pipe socket (8),
- wherein the pipe adapter (6) has a sealing surface (12) for resting in a sealing manner on the outer wall of the pipe,
**characterised in that**
- the pipe socket (8) has a tapering end portion (14) remote from the pipe adapter (6),
- the tapering end portion (14) of the pipe socket (8) is at least partly conical so that a cross-sectional narrowing and an inwardly directed collar is formed, and
- the pipe socket (8) has a plurality of openings (28) in the region of the end portion (14), the openings (28) extend in the longitudinal direction and are formed both in the region of the cylindrical portion (30) of the pipe socket (8) and in the region of the end portion (14).

2. Press-in connecting piece according to claim 1,
**characterised in that**
- the pipe adapter (6) and the press-in nozzle (10) are formed in one piece.

3. Press-in connecting piece according to claim 1,
**characterised in that**
- the pipe adapter (6) and the press-in nozzle (10) are configured in two pieces,
- the press-in nozzle (10) has a flange (18) and
- the pipe adapter (6) has a contact surface (20) which is adapted to the flange (18) of the press-in nozzle (10) and is arranged opposite the sealing surface (12).

4. System consisting of a press-in connecting piece according to any one of claims 1 to 3 and of a tool for fastening a press-in connecting piece on a pipe,
- wherein the tool (32) has a draw mandrel (36) which has a shank (38) and a forming portion (40) with a greater external diameter than the shank (38), and
- wherein the external diameter is smaller than the internal diameter of the pipe socket (8) of the press-in nozzle (10).

5. System according to claim 4,
**characterised in that**
a shoulder (42) for resting on the tapering end portion (14) of the press-in nozzle (10) is arranged between the shank (38) and the forming portion (40).

6. System according to claim 4 or claim 5,
**characterised in that**
a guide adapter (50), connectable to the press-in nozzle (10), having an inner guide surface (52) to guide the draw mandrel (36) is provided.

7. System according to any one of claims 4 to 6,
**characterised in that**
- a clamping sleeve (60) is provided for pushing over the draw mandrel (36), and
- on the end remote from the forming portion (40), the draw mandrel (36) has an external thread (62) to screw thereon a threaded nut (64).

8. System according to claim 7,
**characterised in that**
the clamping sleeve (60) has an external thread (66) to screw thereon a threaded nut (68).

9. System according to claim 4,
**characterised in that**
- the tool (32) is suitable to attach a Press-in connecting piece by means of a pressing machine,
- the tool has a housing (72) and a traction carriage (74) arranged moveably in the housing (72),
- the housing (72) has slot holes (80, 81) in two opposite side surfaces (76, 78),
- the housing (72) has a first end face (82) for resting on the pressing machine and a second opposite end face (84) for resting on the press-in connecting piece, and
- the traction carriage (74) can be connected to the draw mandrel (36) and has a transverse opening (88) for receiving a fastening bolt of the pressing machine.

10. System according to claim 9,
**characterised in that**
a compression spring (90) is arranged in the housing (72) to pretension the traction carriage (74) in the direction of the second end face (84).

## Revendications

1. Pièce de raccordement montée par enfoncement, ladite pièce servant à raccorder un tuyau de sortie à un tuyau situé dans la zone d'une ouverture de sortie, ladite pièce de raccordement montée par enfoncement
- comprenant un adaptateur pour tube (6) présentant une ouverture intérieure (4) et
- comprenant une douille montée par enfoncement (10), ladite douille présentant un manchon tubulaire (8),
- où l'adaptateur pour tube (6) présente une surface d'étanchéité (12) venant en appui de façon étanche sur la paroi extérieure du tuyau,
- où le manchon tubulaire (8) présente une partie d'extrémité (14) qui va en diminuant dans le sens opposé à l'adaptateur pour tube (6),
- où la partie d'extrémité (14) du manchon tubulaire (8), qui va en diminuant, est configurée au moins partiellement de façon conique, de sorte qu'il en résulte une diminution de la section et un collet (26) tourné vers l'intérieur, et
**caractérisée en ce que** le manchon tubulaire (8) présente, dans la zone de la partie d'extrémité (14), une pluralité d'ouvertures (28), où les ouvertures (28) s'étendent dans la direction longitudinale et sont configurées aussi bien dans la zone de la partie cylindrique (30) du manchon tubulaire (8) que dans la zone de la partie d'extrémité (14).

2. Pièce de raccordement montée par enfoncement selon la revendication 1,
**caractérisée en ce que** l'adaptateur pour tube (6) et la douille montée par enfoncement (10) sont configurés en formant une seule et même pièce.

3. Pièce de raccordement montée par enfoncement selon la revendication 1,
**caractérisée**
- **en ce que** l'adaptateur pour tube (6) et la douille montée par enfoncement (10) sont configurés en formant deux pièces,
- **en ce que** la douille montée par enfoncement (10) présente une bride (18) et
- **en ce que** l'adaptateur pour tube (6) présente une surface d'appui (20) adaptée à la bride (18) de la douille montée par enfoncement (10) et disposée en faisant face à la surface d'étanchéité (12).

4. Système se composant d'une pièce de raccordement montée par enfoncement selon l'une quelconque des revendications 1 à 3 et se composant d'un outil servant à la fixation, sur un tuyau, d'une pièce de raccordement montée par enfoncement,
- où l'outil (32) présente une broche de traction (36) qui comprend une tige (38) et une partie réalisée par formage (40), ladite partie ayant un diamètre extérieur augmenté par rapport à la tige (38), et
- où le diamètre extérieur est plus petit que le diamètre intérieur du manchon tubulaire (8) de la douille montée par enfoncement (10).

5. Système selon la revendication 4,
**caractérisé**
**en ce qu'**un épaulement (42) venant en appui sur la partie d'extrémité (14) de la douille montée par enfoncement (10), ladite partie d'extrémité allant en diminuant, est disposé entre la tige (38) et la partie réalisée par formage (40).

6. Système selon la revendication 4 ou 5,
**caractérisé**
**en ce qu'**il est prévu un adaptateur de guidage (50) pouvant être assemblé avec la douille montée par enfoncement (10), ledit adaptateur de guidage ayant une surface de guidage intérieure (52) servant au guidage de la broche de traction (36).

7. Système selon l'une quelconque des revendications 4 à 6, **caractérisé**
- **en ce qu'**il est prévu une douille de serrage (60) servant à coulisser sur la broche de traction (36), et
- **en ce que** la broche de traction (36), au niveau de l'extrémité placée à l'opposé de la partie réalisée par formage (40), présente un filetage extérieur (62) servant à dévisser un écrou fileté (64).

8. Système selon la revendication 7,
**caractérisé**
**en ce que** la douille de serrage (60) présente un filetage extérieur (66) servant à dévisser un écrou fileté (68).

9. Système selon la revendication 4,
**caractérisé**
- **en ce que** l'outil (32) est approprié pour la fixation, au moyen d'une presse, de la pièce de raccordement montée par enfoncement, et
- **en ce que** l'outil présente un carter (72) et un coulisseau de traction (74) disposé en étant mobile dans le carter (72),
- où le carter (72) présente des trous oblongs (80, 81) sur deux surfaces latérales (76, 78) se faisant face l'une l'autre,
- où le carter (72) présente un premier côté frontal (82) venant en appui sur la presse et présente un second côté frontal opposé (84) venant en appui sur la pièce de raccordement montée par enfoncement,
- où le coulisseau de traction (74) peut être assemblé avec la broche de traction (36) et présente une ouverture transversale (88) servant à la réception d'un boulon de sécurité de la presse.

10. Système selon la revendication 9,
**caractérisé**
**en ce qu'**un ressort de pression (90) est disposé dans le carter (72), ledit ressort de pression servant à la précontrainte du coulisseau de traction (74) en direction du second côté frontal (84).
